# FASCICULE DE BREVET EUROPEEN

(11) **EP 3 147 673 B1**
(45) Date de publication et mention de la délivrance du brevet: **19.09.2018**
(21) Numéro de dépôt: 16190342.2
(22) Date de dépôt: 23.09.2016
(51) Int. Cl.: G01P 15/093, G01D 5/353, G01L 1/24, G01H 13/00, G01H 9/00

(54) **CAPTEUR PHYSIQUE OPTO-MECANIQUE A SENSIBILITE AMELIOREE**
OPTOMECHANISCHER PHYSIKALISCHER SENSOR MIT VERBESSERTER EMPFINDLICHKEIT
OPTOMECHANICAL PHYSICAL SENSOR WITH IMPROVED SENSITIVITY

(30) Priorité: 24.09.2015 FR 1559015
(43) Date de publication de la demande: 29.03.2017
(73) Titulaire: Commissariat à l'énergie atomique et aux énergies alternatives, 75015 Paris (FR)
(72) Inventeur: DURAFFOURG, Laurent, 38500 Voiron (FR)
(74) Mandataire: Brevalex

(56) Documents cités:
- WO-A1-00/72025
- WO-A1-2012/142654
- WO-A1-2013/052953
- DE-A1- 4 124 685
- US-A- 4 567 771
- US-A1- 2003 206 693
- US-A1- 2008 271 533
- US-A1- 2009 133 505
- DONG B ET AL: "An on-chip opto-mechanical accelerometer", MICRO ELECTRO MECHANICAL SYSTEMS (MEMS), 2013 IEEE 26TH INTERNATIONAL CONFERENCE ON, IEEE, 20 January 2013 (2013-01-20), pages 641-644, XP032339318, DOI: 10.1109/MEMSYS.2013.6474323 ISBN: 978-1-4673-5654-1

## Description

### DOMAINE TECHNIQUE ET ÉTAT DE LA TECHNIQUE ANTÉRIEURE

La présente invention se rapporte à un capteur physique en particulier inertiel opto-mécanique à sensibilité améliorée par rapport aux capteurs opto-mécanique de l'état de la technique, par exemple pouvant être mis en oeuvre dans la réalisation d'accéléromètres, de gyromètres, de capteurs de pression et de capteurs de champ tels que des magnétomètres.

Les capteurs, notamment les capteurs inertiels, tels que les accéléromètres sont couramment utilisés dans les appareils portables de grande consommation. On cherche alors à réaliser des capteurs inertiels offrant une bonne résolution, de faible encombrement et de coûts réduits par rapport aux capteurs inertiels existants.

Un accéléromètre comporte une masse suspendue qui est mise en mouvement par une force d'accélération extérieure, le déplacement est mesuré et permet de déterminer l'accélération subie par l'accéléromètre et le système auquel il est rattaché. La détection du déplacement de la masse se fait par exemple par des moyens capacitifs.

Le document Dong, B., Cai, H., Tsai, J. M., Kwong, D. L., & Liu, a. Q. (2013). An on-chip opto-mechanical accelerometer. MEMS2013, 641-644. doi:10.1109/MEMSYS.2013.6474323 décrit un accéléromètre opto-mécanique qui comporte un résonateur en forme d'anneau et une masse suspendue à proximité de l'anneau. La masse porte un arc de cercle concentrique à l'anneau, disposé au repos à une distance donnée de l'anneau. Le déplacement de la masse provoque une modification de la distance entre l'anneau et l'arc, il en résulte une modification de l'indice de réfraction effectif de l'anneau du fait de la perturbation des ondes évanescentes. Cette variation d'indice est mesurée et permet de remonter à l'accélération subie.

Cet accéléromètre présente une sensibilité en accélération relativement limitée.

Le document US2003/206693 décrit accéléromètre comportant un guide d'onde et une microcavité optique suspendue à l'extrémité d'une tige qui est fixée à un substrat par son autre extrémité. La microcavité est déplacée sous l'effet de l'accélération et le couplage entre le guide d'onde et la microcavité optique est modifié.

Le document US2009/0133505 décrit un détecteur de contraintes de cisaillement comprenant un levier pour amplifier la force exercée sur un résonateur optique. Le document DE4124685 décrit un accéléromètre avec une poutre fixée de manière à agrandir le mouvement d'une masse qui subit la force qui doit être mesurée.

### EXPOSÉ DE L'INVENTION

Le but de la présente invention est d'offrir un capteur physique, notamment un capteur inertiel opto-mécanique, à sensibilité augmentée.

Le but précédemment énoncé est atteint par un capteur physique comportant un masse mobile, au moins un résonateur optique, des moyens pour convertir le déplacement de la masse ou la contrainte subie par la masse en modification de la fréquence de résonance du résonateur optique, lesdits moyens de conversion étant tels qu'ils amplifient le déplacement ou la contrainte issue du déplacement de la masse au résonateur optique de sorte à obtenir une modification de la fréquence de résonance du résonateur optique.

En d'autres termes, l'invention met en oeuvre un effet bras de levier pour augmenter l'effet d'un déplacement de la masse résultant, par exemple de l'application d'une force inertielle ou d'une contrainte inertielle subie par la masse, sur le résonateur optique et ainsi augmenter sa sensibilité de détection du capteur.

Dans un mode de réalisation, l'amplitude du déplacement de la masse est amplifiée provoquant une variation de la ou des fréquences de résonance du ou des résonateurs optiques par une influence à distance.

De manière très avantageuse, le capteur est un système micro-opto-mécanique et/ou nano-opto-mécanique, la masse et la poutre sont avantageusement réalisées dans une couche épaisse tandis que le résonateur optique est réalisé dans une couche fine. La sensibilité du capteur est encore améliorée, la masse présentant une inertie plus importante.

A titre d'exemple, le capteur peut être mis en oeuvre dans un accéléromètre ou dans un gyromètre.

Avantageusement le capteur comporte deux résonateurs optiques montés en différentielle.

Le ou les résonateurs optiques sont par exemple des micro-disques optiques, des micro-tores ou des cristaux photoniques.

La présente invention a alors pour objet un capteur physique comportant à partir d'un substrat :
- une masse mobile par rapport au substrat, ladite masse étant apte à être mise en mouvement par une force extérieure,
- au moins un premier résonateur optique, associé à une première structure de guidage pour l'injection dans le premier résonateur optique d'une onde lumineuse injectée et la collecte en sortie du premier résonateur optique d'une onde lumineuse collectée,
- une structure mécanique apte à modifier la fréquence de résonance optique dudit premier résonateur optique,
- des moyens de transmission du déplacement de la masse à la structure mécanique, lesdits moyens de transmission étant articulés en rotation par rapport au substrat par une liaison pivot et la masse étant solidaire mécaniquement des moyens de transmission, la structure mécanique étant disposée par rapport à la masse et à la liaison pivot de sorte que les moyens de transmission transmettent à cette structure mécanique, de manière amplifiée, le déplacement de la masse.

Dans un exemple de réalisation, la structure de guidage comporte soit un guide d'onde pour l'injection de l'onde lumineuse injectée et un guide d'onde pour la collecte de l'onde lumineuse collectée, soit un seul guide d'onde disposé de sorte à effectuer à la fois l'injection de l'onde lumineuse injectée et la collecte de l'onde lumineuse collectée.

De manière avantageuse, les moyens de transmission comportent une poutre articulée en rotation par rapport au substrat, la masse étant solidaire de la poutre.

Selon l'invention, la structure mécanique modifie la fréquence de résonance optique dudit premier résonateur optique sans contact avec ledit premier résonateur optique.

La masse est solidarisée à la poutre d'un côté de la liaison pivot et la structure mécanique est solidarisée à la poutre de l'autre côté de la liaison pivot.

La structure mécanique peut comporter au moins un élément sous forme de plaque dont un bord est apte à se rapprocher et à s'éloigner du premier résonateur optique.

Le premier résonateur optique peut être suspendu entre le substrat et les moyens de transmission. De préférence, le premier résonateur optique est suspendu par des poutres rigides reliées au substrat.

Le premier résonateur est par exemple en Si, AsGa ou SiN.

Avantageusement, la masse et les moyens de transmission sont plus épais que le premier résonateur optique.

Selon une caractéristique additionnelle, le premier résonateur optique est un anneau optique, un micro tore optique ou un micro disque optique.

En variante, le premier résonateur optique est une partie d'un cristal photonique disposée sur le substrat et la structure mécanique comporte une autre partie du cristal photonique, qui est solidaire des moyens de transmission.

De manière avantageuse, le capteur peut comporter un deuxième résonateur optique associé à une deuxième structure de guidage pour l'injection dans le deuxième résonateur optique d'une onde lumineuse injectée de fréquence identique à celle injectée dans le premier résonateur, ladite deuxième structure de guidage permettant la collecte d'une onde lumineuse collectée en sortie du deuxième résonateur, l'onde lumineuse injectée dans le premier résonateur optique et l'onde injectée dans le deuxième résonateur optique étant obtenues par exemple à partir d'une même source lumineuse divisée, lesdits premier et deuxième résonateurs optiques étant disposé de sorte à permettre une mesure différentielle.

La présente invention a également pour objet un ensemble de mesure comportant au moins un capteur selon l'invention, une source d'une onde lumineuse apte à être injectée au moins dans la première structure de guidage, au moins un détecteur de l'onde lumineuse collectée disposé en sortie de la première structure de guidage, et une unité de traitement d'au moins le ou les signaux collectés par le détecteur.

L'unité de traitement traite par exemple une modulation d'amplitude.

La source de l'onde lumineuse peut injecter à une fréquence différente de la fréquence de transmission maximale du premier résonateur optique en l'absence d'influence de la structure mécanique sur la fréquence de résonance du premier résonateur optique.

L'unité de traitement traite par exemple une variation de fréquence de résonance optique du premier résonateur optique ou des variations de fréquences de résonance optique des premier et deuxième résonateurs optiques montés en différentielle.

En variante, l'unité de traitement traite une variation de fréquence mécanique du premier résonateur optique mis en vibration mécanique ou des variations des fréquences mécaniques des premier et deuxième résonateurs optiques mis en vibration mécanique. L'ensemble peut comporter une boucle fermée, de type boucle à verrouillage de phase.

### BRÈVE DESCRIPTION DES DESSINS

La présente invention sera mieux comprise sur la base de la description qui va suivre et des dessins en annexe sur lesquels :
- la figure 1A est une vue de dessus en représentation schématique d'un exemple d'un premier mode de réalisation d'un capteur en particulier inertiel,
- la figure 1B est une vue de dessus d'une variante du capteur de la figure 1A,
- les figures 2A, 2B et 2C sont des vues en coupe du capteur de la figure 1 suivant les plans A-A', B-B' et C-C' respectivement,
- les figures 3A et 3B sont des vues de dessus de variantes de réalisation du capteur de la figure 1,
- la figure 4 est une vue de dessus d'un autre exemple de capteur en particulier inertiel selon le premier mode de réalisation mettant en oeuvre des cristaux photoniques,
- la figure 5 est une représentation graphique de la fonction de transfert d'un résonateur optique mis en oeuvre dans un capteur selon l'invention en particulier inertiel,
- la figure 6A est une vue de dessus en représentation schématique d'un exemple d'un capteur en particulier inertiel au repos, qui ne fait pas partie de l'invention,
- la figure 6B est une vue du capteur de la figure 6A en phase de détection,
- les figures 7A et 7B sont des vues en coupe du capteur de la figure 6A suivant les plans D-D' et E-E' respectivement,
- la figure 8A est une vue de dessus d'une variante de réalisation du capteur de la figure 6A,
- la figure 8B est une vue de dessus d'une autre variante de réalisation du capteur de la figure 6A,
- la figure 9 est une représentation schématique du capteur de la figure 6A ave les lasers sondes et les photodétecteurs,
- la figure 10 est une représentation graphique de la fonction de transfert d'un résonateur optique mis en oeuvre dans un capteur selon une réalisation en particulier inertiel, qui ne fait pas partie de l'invention,
- la figure 11 est une représentation schématique de ce capteur avec les lasers sondes, les photodétecteurs et une boucle fermée.

### EXPOSÉ DÉTAILLÉ DE MODES DE RÉALISATION PARTICULIERS

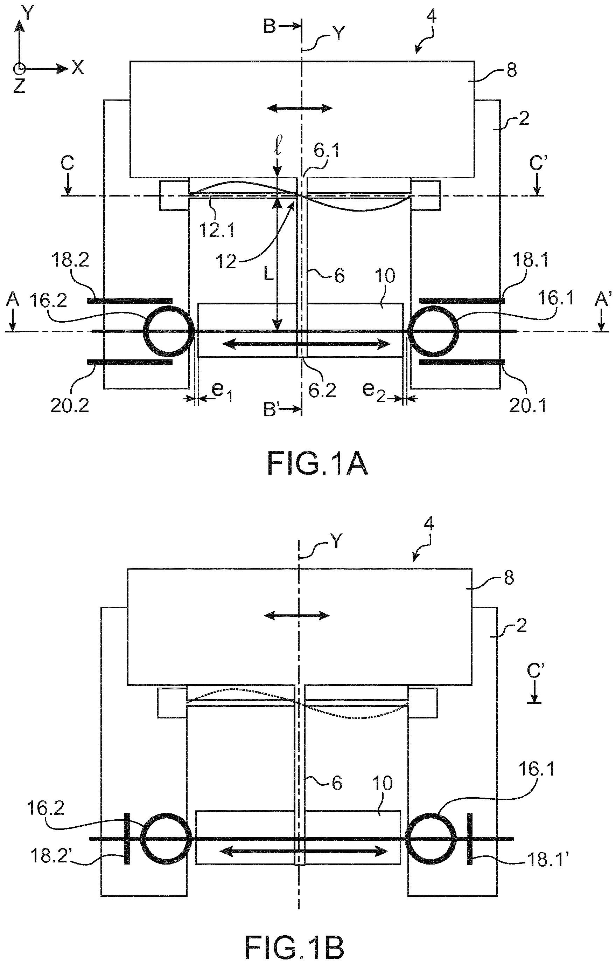

La figure 1A est une vue de dessus d'un exemple de réalisation d'un capteur selon un premier mode de réalisation, qui est un capteur inertiel, comportant un substrat 2 et une structure 4 suspendue par rapport au substrat 2.

La structure 4 est apte à se déplacer par rapport au substrat sensiblement dans le plan du capteur autour d'un axe de rotation Z perpendiculaire au plan du capteur XY qui est le plan de la feuille dans la représentation de la figure 1A.

La structure 4 comporte une poutre 6 d'axe longitudinal Y, une masse 8 située au niveau d'une première extrémité longitudinale 6.1 de la poutre 6 et un élément d'influence 10 situé au niveau d'une deuxième extrémité longitudinale 6.2 de la poutre 6.

L'élément d'influence 10 est dans l'exemple représenté formé par une plaque rigide.

L'ensemble poutre 6, masse 8 et élément d'influence 10 forme un ensemble rigide. La structure est articulée en rotation autour de l'axe Z par rapport au substrat au moyen d'une liaison pivot 12.

Dans la suite de la description, la poutre 6 sera désignée « bras de levier » pour éviter toute confusion avec les poutres formant bras de suspension ou liaison pivot.

La liaison pivot 12 comporte, dans l'exemple représenté, deux poutres 12.1 s'étendant de part et d'autre du bras de levier 6 perpendiculairement à celui-ci, vers le substrat, chaque poutre 12.1 étant ancrée sur le substrat par un plot d'ancrage. Les deux poutres 12.1 sont déformables en flexion.

Le capteur comporte également au moins un résonateur optique, dans l'exemple représenté deux résonateurs optiques sur le substrat. Le ou les résonateurs optiques 16.1, 16.2 sont fixes par rapport au substrat et sont disposés par rapport à l'élément d'influence de sorte qu'un entrefer de largeur variable soit délimité entre l'élément d'influence et le ou les résonateurs optiques 16,1, 16.2.

Dans l'exemple représenté, l'élément d'influence s'étend le long de l'axe X perpendiculairement au bras de levier et est disposé entre les deux résonateurs optiques. L'élément d'influence 10 comporte deux faces d'extrémité 10.1, chacune en regard d'un résonateur optique 16.1, 16.2, délimitant avec celui-ci un entrefer e1, e2 respectivement. Les deux entrefers varient en sens inverse permettant une mesure différentielle.

Avantageusement, au repos, i.e. lorsque la masse est immobile par rapport au substrat, les valeurs des entrefers e1 et e2 sont égales.

Dans l'exemple représenté, les deux résonateurs optiques sont similaires, seul le résonateur optique 16.1 sera décrit en détail.

Le résonateur 16.1 comporte un anneau. En outre, un guide d'onde de couplage 18.1 permet d'injecter un faisceau lumineux incident, par exemple continu, dans le résonateur et un guide d'onde de couplage 20.1 permet de collecter le faisceau lumineux transmis ou réfléchi.

Les guide d'onde sont disposés de part et d'autre de l'anneau dans la direction Y.

Le faisceau incident est par exemple émis par un laser.

Le faisceau transmis ou réfléchi est collecté par exemple par un photodétecteur.

Le faisceau peut être émis par un laser externe dont la lumière est couplée par un réseau de couplage ou par une injection par la tranche. Le laser peut aussi être rapporté au-dessus du guide d'onde d'injection et la lumière se couple directement dans ce guide en couplage évanescent. Le détecteur est placé au-dessus d'un second réseau qui diffuse la lumière sur le détecteur. Selon un mode alternatif, le détecteur est directement placé au bout du guide d'onde de sortie. Le faisceau transmis ou réfléchi par le résonateur optique sera désigné par la suite « faisceau de détection ».

La liaison pivot 12 est située le long du bras de levier 6 de sorte qu'apparaisse un effet levier et que le déplacement de l'élément d'influence soit amplifié par rapport à celui de la masse. Pour cela, la liaison pivot 12 est située à une distance plus courte de la masse que de l'élément d'influence 10. La distance entre la liaison pivot et le bord de la masse le long de la direction X est notée I et la distance entre la zone médiane de l'élément d'influence et la liaison pivot est notée L, L étant supérieure à I. De préférence, L est choisi très grand par rapport à I pour optimiser l'effet levier tout en tenant compte des contraintes de réalisation et d'encombrement. L est typiquement comprise entre 1 µm et plusieurs dizaines de microns et I est typiquement comprise entre une centaine de nanomètres et quelques microns.

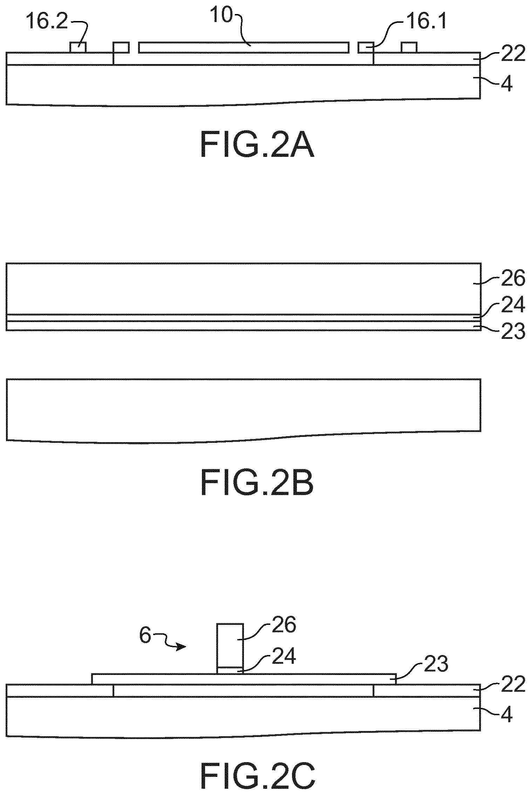

Sur les figures 2A à 2C, on peut voir le capteur de la figure 1A suivant différents plans de coupe.

La structure mobile est suspendue sur le substrat 4 via une couche 22, dite couche sacrificielle par exemple en oxyde, qui est en partie gravée pour libérer la structure mobile.

La structure est réalisée dans un empilement comportant une couche fine 23, dite couche NEMS, une couche intercalaire 24 et une couche épaisse 26, dite couche MEMS.

Par exemple, la couche MEMS comporte du silicium, du poly-silicium ou du silicium amorphe et a par exemple une épaisseur comprise entre 100 nm et 500 nm, et la couche NEMS comporte par exemple du silicium, du SiGe ou du Ge et a par exemple une épaisseur comprise entre 10 µm et 100 µm.

Le matériau de la ou des couches est choisie en fonction des propriétés mécaniques et de la gamme de longueur d'onde optique souhaitée.

L'élément d'influence a une épaisseur au moins égale à celle des résonateurs afin d'avoir une influence notable sur ceux-ci.

De préférence et comme cela est représenté sur la figure 2C, la masse et le bras de levier sont réalisés dans une couche épaisse, dite couche MEMS, et l'élément d'influence et/ou les moyens de suspension, et/ou les guides d'onde et/ou les résonateurs optiques peuvent être réalisés dans une couche fine, dite couche NEMS.

Selon une variante également avantageuse, la masse, le bras de levier et l'élément d'influence sont réalisés dans la couche épaisse MEMS, et les moyens de suspension, et/ou les guides d'onde et/ou les résonateurs optiques sont réalisés dans la couche fine NEMS.

Par exemple, les guides d'onde 16.1, 16.2 et les résonateurs optiques 18.1, 18.2, 20.1, 20.2 peuvent avoir une épaisseur comprise entre 100 nm et 1 µm, typiquement égale à 200 nm et le bras de levier 6, la masse et l'élément d'influence 10 peuvent avoir une épaisseur comprise entre 1 µm et 50 µm, typiquement égale à 20 µm.

Cette réalisation permet de réaliser une masse présentant une inertie plus grande, ce qui améliore encore davantage la sensibilité du capteur.

En variante, les éléments optiques tels que le ou les résonateurs et les moyens de suspension peuvent être réalisés dans des couches différentes.

En variante, le ou les résonateurs optiques comportent des micro-disques optiques ou des micro-tores.

De préférence, dans une réalisation d'un capteur à mesure différentielle, les deux résonateurs optiques sont de structures similaires.

Sur la figure 1B, on peut voir une variante de réalisation du capteur de la figure 1A dans laquelle, pour chaque résonateur 16.1, 16.2, un seul guide d'onde de couplage 18.1', 18.2' respectivement injecte le faisceau lumineux incident dans le résonateur et collecte le faisceau transmis ou réfléchi.

Plusieurs résonateurs pourraient être prévus d'un côté ou de chaque côté de l'élément d'influence.

Le fonctionnement du capteur de la figure 1A va maintenant être décrit.

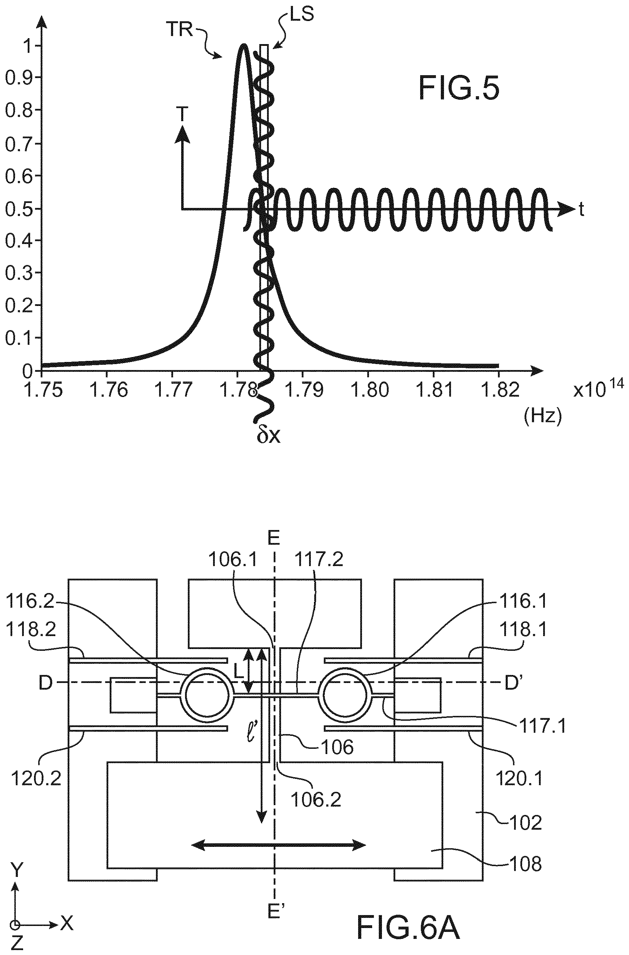

Sur la figure 5, on peut voir la représentation de la fonction de transfert en amplitude désignée Tr d'un résonateur optique mis en oeuvre dans un capteur selon l'invention. LS désigne la fréquence de fonctionnement du laser sonde injecté dans le résonateur.

Sont également schématisés le déplacement de la masse δx en fonction du temps et la modulation en amplitude T du signal optique de détection en fonction du temps. La fonction de transfert pourrait en variante être une fonction de transfert en phase.

De préférence, la fréquence du faisceau injecté est décalée par rapport à la longueur d'onde donnant le maximum de transmission afin d'injecter à une fréquence dans une zone de grande pente. Ainsi une faible variation de la fréquence de résonance du résonateur optique, la fréquence de résonance correspondant au maximum de la fonction de transfert, provoque une forte variation en amplitude. Typiquement, le décalage de la fréquence de résonance optique normalisée à la fréquence optique au repos est de l'ordre de quelques ppm (partie par million) ce qui correspond à une modulation de quelques dizaines de ppm.

Au repos, l'élément d'influence se trouve à une distance donnée e1, e2 de chacun des anneaux 16.1, 16.2 respectivement, la valeur de l'indice optique effectif il, i2 de chacun des anneaux 16.1, 16.2 au repos dépend des valeurs de e1 et e2. Ces indices il, i2 fixent les fréquences de résonance au repos des anneaux 16.1, 16.2 respectivement

Seule la détection par le résonateur 16.1 va être décrite, la détection étant similaire sur le résonateur 16.2.

Le laser injecte un faisceau sonde en continue dans le guide d'onde 18.1, celui-ci circule dans l'anneau. Un faisceau de détection est collecté par le guide d'onde de détection 20.1.

Sous l'effet d'une force inertielle extérieure, par exemple une accélération, la masse se déplace autour de l'axe Z. L'élément d'influence 10 pivote également autour de Z. Du fait de l'effet bras de levier, tout mouvement δx de la masse 8 provoque un déplacement de l'élément d'influence avec une amplitude amplifiée d'un facteur L/I. La valeur de l'entrefer e1 varie avec le déplacement de l'élément d'influence, cette modification de l'entrefer provoque une modification de l'indice optique effectif de l'anneau 16.1. Cette variation d'indice optique provoque une modification de la fréquence de résonance optique de l'anneau 16.1, ce qui modifie la fonction de transfert du résonateur 16.1. Cette modification de la fonction de transfert est détectée par une modulation de l'amplitude du faisceau de détection. A partir des mesures de la modulation d'amplitude, il est possible de remonter aux caractéristiques de la force inertielle. La modification de la fréquence de résonance optique de l'anneau modifie également la fréquence du signal de détection. En variante, en mesurant cette fréquence, il est possible de remonter aux caractéristiques de la force inertielle.

La détection sur le résonateur 16.2 se fait d'une manière similaire à celle sur le résonateur 16.1. En revanche, lorsque e1 augmente, e2 diminue. En combinant les mesures sur les faisceaux de détection sortant des guides d'onde, on réalise une mesure différentielle.

Il sera compris que le capteur peut ne comporter qu'un résonateur optique.

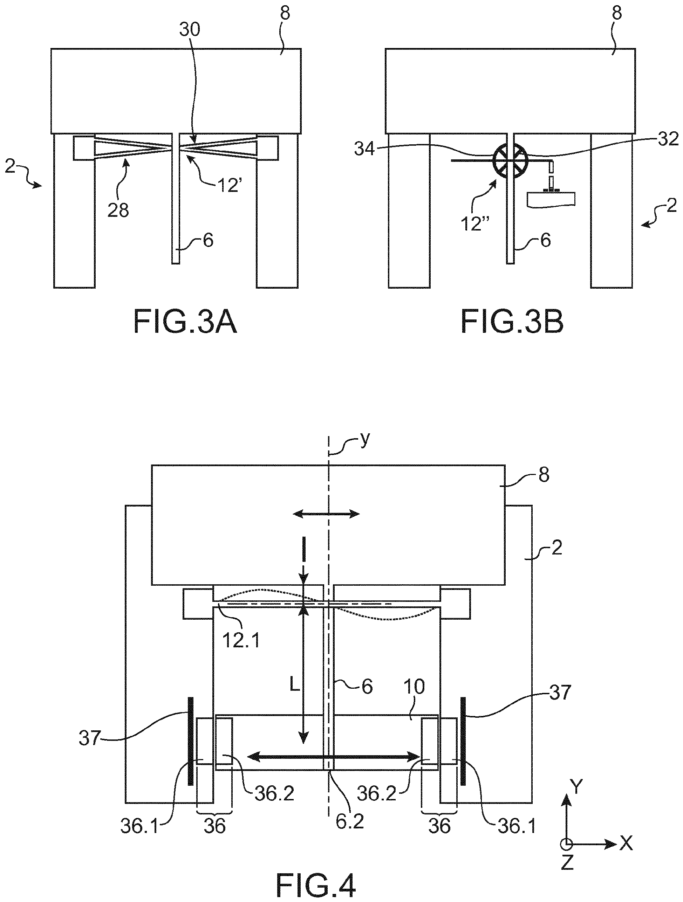

Sur la figure 1A, la liaison pivot entre la structure et le substrat comporte deux poutres déformables en flexion. Sur la figure 3A, on peut voir une variante de réalisation, dans laquelle la liaison pivot comporte deux paires de poutres 28, 30, chaque paire étant disposée de part et d'autre du bras de levier. Les poutres 28, 30 de chaque paire sont ancrées par une extrémité sur le substrat et ancrées par une autre extrémité au bras de levier au même point. L'autre paire est montée symétriquement sur le substrat et sur le bras de levier, le point d'ancrage des quatre poutres sur le bras de levier définissant l'axe de la liaison pivot. Les poutres sont déformables en flexion.

Sur la figure 3B, on peut voir une autre variante de réalisation de la liaison pivot 12" comportant quatre poutres 32 disposées en croix suspendues entre le bras de levier et un anneau 34 solidaire du substrat.

En variante encore, la liaison pivot pourrait comporter un pion d'axe Z solidaire ancré par une extrémité au substrat et par une autre extrémité au bras de levier et déformable en torsion.

Sur la figure 4, on peut voir un autre exemple de réalisation d'un capteur selon le premier mode de réalisation, qui est dans cet exemple un capteur inertiel, dans lequel les résonateurs optiques comportent chacun un cristal photonique 36.

Chaque cristal photonique 36 comporte une première partie 36.1 portée par le substrat et une deuxième partie 36.2 portée par la structure mobile en regard de la première partie 36.1 et disposées de sorte que la distance entre les première 36.1 et deuxième 36.2 partie de cristal photonique varie avec le déplacement de la masse. Un faisceau lumineux circule entre les première 36.1 et deuxième 36.2 parties du cristal, la variation de la distance entre les deux parties 36.1, 36.2 du cristal modifie la fréquence propre du résonateur, qui peut ensuite être mesurée en mesure la fréquence du faisceau lumineux transmis. Le système fonctionne ici en transmission avec un guide d'onde 37 se couplant au cristal photonique.

La valeur de la limite de résolution ou LOD pour Limit of Détection en terminologie anglo-saxonne va être donnée pour un capteur de la figure 1A.

Le capteur comporte :
- une masse d'épreuve ayant une longueur de 100 µm, une largeur de 50 µm et une épaisseur de 10 µm,
- un effet bras de levier de *L*/*l*=5,
- une finesse *F*=*ISL*/*δλ* de 10 pour un résonateur optique en forme d'anneau en silicium d'indice effectif *neff*=2,4*,* et de rayon *R* = 50 µm, soit un intervalle spectrale libre ou *lSL* de l'ordre de 3,2 nm.

Le calcul de la limite de résolution tient compte du bruit du laser, du bruit de l'électronique et du bruit de la photodiode qui collecte le faisceau transmis ou réfléchi.

La puissance moyenne injectée est de l'ordre de 1 µW et le bruit du laser est de l'ordre de 6x10⁻¹¹ W/√Hz (cela correspond à un bruit relatif de -145dB/Hz pour une puissance moyenne émise de 0dBm). Le bruit de la photodiode caractérisé par sa NEP (Noise Equivalent Power en terminologie anglo-saxonne) est de 1pW/√Hz pour un gain GR de 5x10⁴ et le bruit typique d'une électronique est de 10nV/√Hz.

Dans ces conditions la limite de résolution à 3σ est de 0,5 ng pour 100 ms de temps d'intégration. A titre de comparaison, les mesures ou calculs donnés dans la littérature font état de limites de résolution limitées à quelques µg. La limite la plus basse atteinte est de 5ng pour 1s de temps d'intégration sur des composants plus massifs en lecture capacitive. L'invention permet donc de gagner un ordre de grandeur sur la limite de résolution en étant 10 fois plus rapide sur la durée de la mesure.

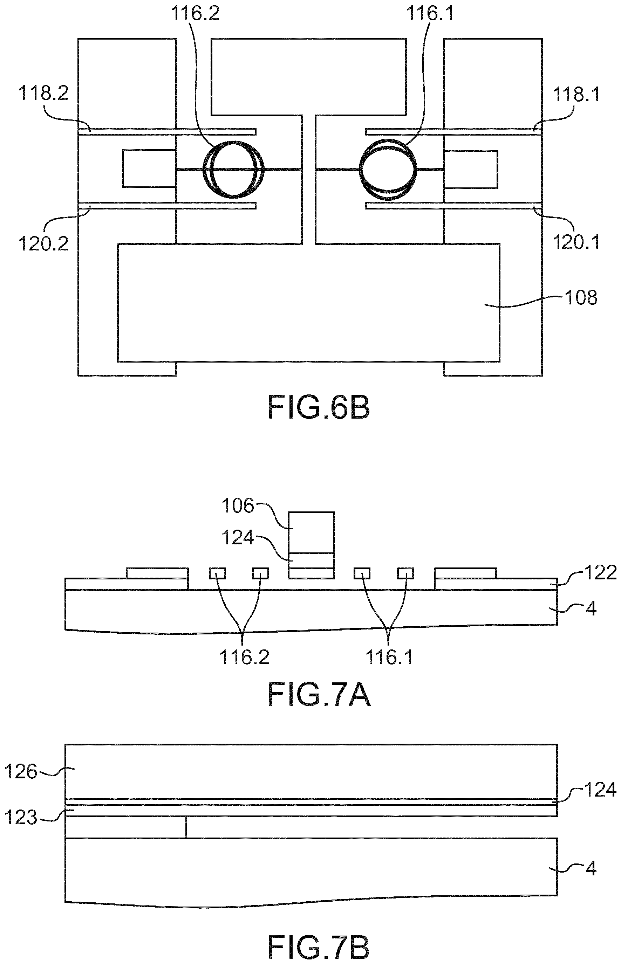

Les figures 6A et 6B sont des vues de dessus d'une réalisation d'un capteur selon un deuxième exemple, qui ne fait pas partie de l'invention. Celui-ci diffère du capteur selon l'invention en ce que les résonateurs optiques sont déformés mécaniquement.

Le capteur des figures 6A et 6B comportant un substrat 102 et une structure 104 suspendue par rapport au substrat 102.

La structure 104 est apte à se déplacer par rapport au substrat sensiblement dans le plan du capteur autour d'un axe de rotation Z perpendiculaire au plan du capteur XY qui est le plan de la feuille dans la représentation de la figure 6A.

La structure 104 comporte une poutre 106 d'axe longitudinal Y encastrée mécaniquement par une première extrémité 106.1 sur le substrat. La structure 104 comporte également une masse 108 située à une deuxième extrémité longitudinale 106.2 de la poutre 106.

La structure est apte à pivoter dans le plan autour de l'axe Z grâce à la liaison pivot formée entre la poutre 106 et l'encastrement, la poutre 106 étant déformée en flexion.

Le capteur comporte également au moins un résonateur optique, dans l'exemple représenté deux résonateurs optiques sur le substrat. Le ou les résonateurs optiques 116.1, 116.2 sont disposés de part et d'autre de l'axe Y de la poutre 106.

Chaque résonateur est suspendu entre le substrat et la poutre 106. Dans l'exemple représenté, les résonateurs comportent un anneau.

Chaque anneau est suspendu au substrat 102 par une poutre 117.1 encastrée sur le substrat et au bras de levier par une poutre 117.2. Les poutres 117.1 et 117.2 sont destinées à transmettre une contrainte aux résonateurs.

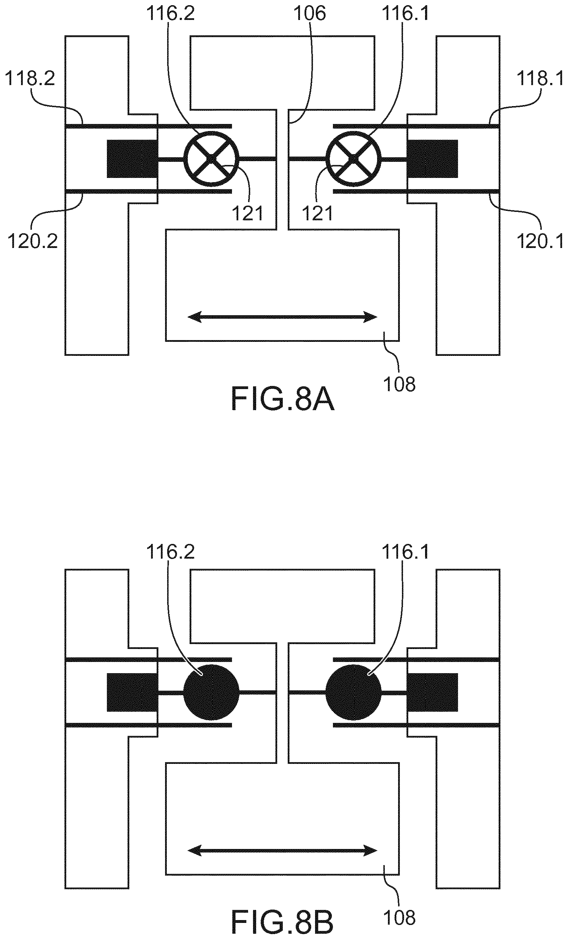

Les poutres 117.1, 117.2 sont suffisamment rigides mécaniquement pour éviter toute flexion ou flambage et transmettre la contrainte aux résonateurs optiques. En outre, les résonateurs optiques possèdent une rigidité mécanique importante dans l'axe des poutres. Les capteurs des figures 8A et 8B qui seront décrits par la suite offrent des structures optiques présentant une rigidité « renforcée ».

Un guide d'onde sonde 118.1 pour acheminer faisceau le lumineux incident, par exemple continu, dans l'anneau est prévu pour chaque anneau. Il s'étend le long de l'anneau et est en porte-à-faux sur le substrat. Un guide d'onde de détection 120.1 pour le faisceau lumineux de détection est également prévu pour chaque résonateur en porte-à-faux sur le substrat. Les guides d'onde s'étendent de part et d'autre de l'anneau parallèlement l'un à l'autre.

La distance entre l'encastrement du bras de levier et le centre de gravité de la masse est désignée l', et la distance entre l'encastrement et le point d'application de la contrainte sur les résonateurs, i.e. le point de connexion entre le bras de levier et les poutres 117.2 connectées aux résonateurs est désignée L'.

De préférence l'est choisie très grande par rapport à L' pour augmenter l'amplification de la contrainte subit par la masse et appliquée aux résonateurs.

L' est typiquement comprise entre 1 µm et plusieurs dizaines de microns et l'est typiquement comprise entre une centaine de nanomètres et quelques microns.

Le ou les résonateurs optiques peuvent comporter en variante un ou de micro-disques optiques et un ou des micro-tores optiques.

Le faisceau incident est par exemple émis par un laser. Le faisceau transmis ou réfléchi est collecté par exemple par un photodétecteur.

Sur les figures 7A et 7B on peut voir des vues en coupe du capteur de la figure 6A le long de plan D-D' et E-E' respectivement.

La structure mobile est suspendue sur le substrat via une couche 122, dite couche sacrificielle par exemple en oxyde, qui est en partie gravée pour libérer la structure mobile.

La structure est réalisée dans un empilement comportant une couche fine 122, dite couche NEMS, une couche intercalaire 124 et une couche épaisse 126, dite couche MEMS.

Par exemple, la couche MEMS comporte du silicium, du poly-silicium ou du silicium amorphe et a par exemple une épaisseur comprise entre 100 nm et 500 nm et la couche NEMS comporte par exemple du silicium, du SiGe ou du Ge et a par exemple une épaisseur comprise entre 10 µm et 100 µm.

Le matériau de la ou des couches est choisie en fonction des propriétés mécaniques et de la gamme de longueur d'onde optique souhaitée.

De préférence et comme cela est représenté sur la figure 7A, la masse et/ou le bras de levier sont réalisés dans une couche épaisse, dite couche MEMS et le ou résonateurs optiques et/ou les poutres 117.1, 117.1 peuvent être réalisés dans une couche fine, dite couche NEMS. Cette réalisation permet de réaliser une masse présentant une inertie plus grande, ce qui améliore encore davantage la sensibilité du capteur.

Les éléments réalisés uniquement dans la couche NEMS sont par exemple définis par lithographie et gravure.

Sur la figure 8A, on peut voir une variante de réalisation avantageuse du capteur de la figure 6A, dans laquelle des moyens de maintien supplémentaire 121 des résonateurs optiques sont prévus. Dans l'exemple représenté, ces moyens de maintien supplémentaires comportent quatre bras disposés en croix dont les extrémités sont connectées à la périphérie intérieure de l'anneau et le centre de la croix est relié au substrat par exemple par l'intermédiaire d'un pion parallèle à l'axe Z.

Ces moyens de maintien permettent d'obtenir un système plus rigide offrant une meilleure transmission de la contrainte.

Sur la figure 8B, on peut voir une autre variante de réalisation encore plus avantageuse du capteur de la figure 6A, dans lequel les résonateurs optiques 116.1, 116.2 comportent des disques résonants. En effet, les disques offrent une rigidité encore augmentée par rapport aux anneaux de la figure 8A et donc une meilleure transmission de la contrainte.

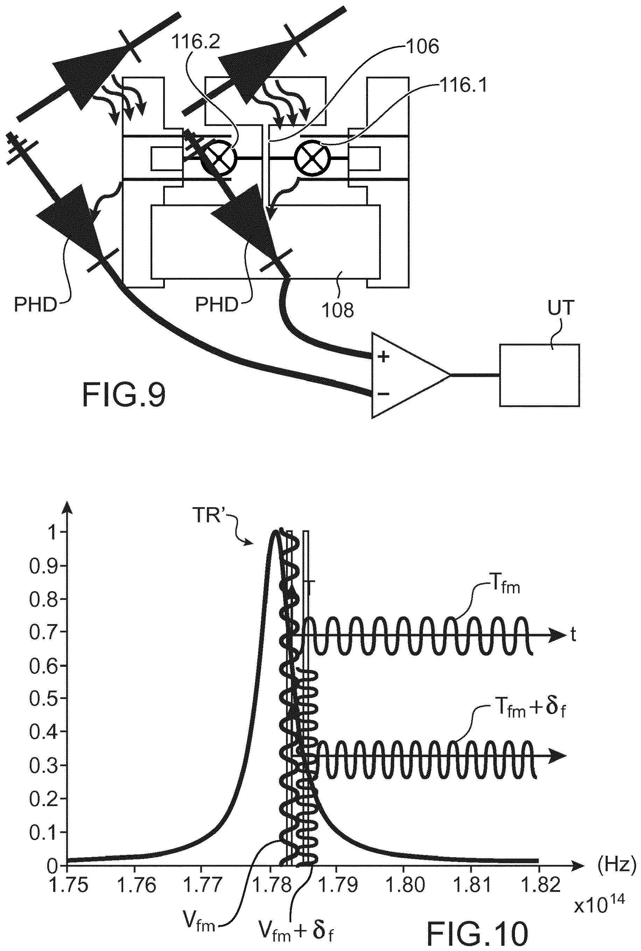

Le fonctionnement du capteur va maintenant être décrit en relation avec la figure 9 qui schématise les lasers et les photodétecteurs.

Un faisceau incident injecté dans le résonateur 116.1 est émis par le laser, de préférence, sa fréquence est décalée par rapport à celle donnant le pic maximum de transmission ou de réflexion. Un faisceau de détection est collecté par exemple par des photodétecteurs PHD. Les photodétecteurs transmettent les signaux à une unité de traitement et de calcul UT pour traiter les signaux provenant des deux résonateurs et déterminer la force.

Lorsqu'une une force inertielle extérieure apparaît, par exemple une force inertielle, telle qu'une accélération, la masse se déplace autour de l'axe Z. Les poutres 117.1 et 117.2 exercent une contrainte sur les résonateurs optiques, l'un des résonateurs est comprimé tandis que l'autre est étiré. La contrainte appliquée est amplifiée par rapport à la contrainte inertielle d'un rapport L'/l' du fait de l'effet bras de levier. Dans le cas d'anneaux optiques, en se déformant, ils deviennent en première approximation des ellipses.

La contrainte induit une déformation du résonateur optique provoquant à la fois une variation de la longueur de la cavité résonante et une variation de l'indice effectif vue par les photons de la cavité. Sur la figure 6B, on peut voir représentés schématiquement les anneaux optiques déformés sous l'effet de la contrainte inertielle amplifiée. En effet cet indice varie par effet électrostrictif. Cet effet électrostrictif se superpose à la déformation géométrique. Par conséquent la contrainte inertielle appliquée aux résonateurs, en déformant les résonateurs, modifie la longueur de la cavité et son indice optique effectif.

Le capteur selon les figures 6 à 8 offre alors une plus grande sensibilité.

Comme pour le capteur selon l'invention, la modification de l'indice optique du résonateur, provoque une variation de la fréquence ou une variation d'amplitude du faisceau de détection. A partir de ces mesures, on peut déterminer les caractéristiques de la force appliquée à la masse.

Dans l'exemple représenté, on effectue une mesure différentielle, deux lasers sondes et deux photodétecteurs, un pour chaque résonateur, sont alors mis en oeuvre. Comme pour le premier mode de réalisation, le capteur peut ne comporter qu'un seul résonateur.

Dans les mêmes conditions que celles appliquées au capteur de la figure 1A, et en considérant la variation du périmètre des résonateurs optiques et en ne considérant pas l'effet électrostrictif, la limite de résolution à 3σ est de 1 ng pour 100 ms de temps d'intégration.

Lorsque l'on tient compte de l'effet électrostrictif, la réponse peut être améliorée d'un facteur 2, la résolution peut donc être 0,5 ng. L'influence de l'effet électrostrictif dépend par exemple des matériaux utilisés pour réaliser les résonateurs optiques, par exemple l'AsGa permet d'augmenter l'influence de l'effet électrostrictif. D'autres matériaux peuvent être utilisés tels que le SiN ou le Si.

Un capteur selon un troisième exemple, qui ne fait également pas partie de l'invention, à détection fréquentielle va maintenant être décrit.

Le capteur a une structure similaire au capteur de la figure 6A, les mêmes références seront alors reprises, et il comporte en outre des moyens pour mettre en vibration le ou les résonateurs afin qu'il(s) forme(nt) une ou des résonateurs mécaniques. Avantageusement les moyens actionnent optiquement le ou les résonateurs. Les moyens comportent, pour chaque résonateur, par exemple une source lumineuse d'excitation modulée en amplitude à une fréquence de résonance mécanique du résonateur, cette fréquence est différente de la fréquence du faisceau sonde.

La source lumineuse d'excitation est par exemple une source laser désignée laser pompe. Les fréquences de résonance mécanique peuvent varier de 10 MHz et 1 GHz en fonction des matériaux et des dimensions. Elles correspondent à une fréquence propre de la cavité du résonateur. La source lumineuse possède une puissance optique suffisante pour générer le mouvement par pression de radiation des photons. La puissance est par exemple comprise entre 100 nW et 100 µW. la mise en vibration mécanique sera d'autant plus forte que le facteur de qualité optique sera élevé.

En variante, la mise en vibration du ou des résonateurs peut être obtenue par d'autres moyens, par exemple par des moyens électriques de type capacitif.

Sur la figure 10, on peut voir représentée la fonction de transfert TR' du capteur. Sont représentées la vibration Vfₘ à la fréquence mécanique fₘ en Hz du résonateur et la vibration Vfₘ + δf à la fréquence mécanique fₘ + δf en Hz du résonateur lorsqu'une contrainte mécanique due à une force extérieure s'applique sur le résonateur. Sont schématisées les variations de l'intensité lumineuse de détection Tfₘ et Tfₘ + δf pour les deux fréquences mécaniques.

Le fonctionnement du capteur à détection fréquentielle va maintenant être décrit.

Le laser sonde injecte un faisceau sonde dans le résonateur. Un photodétecteur collecte le faisceau de détection.

Le laser pompe injecte un faisceau lumineux à une fréquence de résonance mécanique du résonateur opto-mécanique. Le résonateur optique vibre selon un mode propre de déformation, de type mode de voûte acoustique ou Whispering-gallery- mode (WGM) en terminologie anglo-saxonne, mode extensionnel par exemple, ce qui induit, à des échelles de temps beaucoup plus courtes que le signal d'accélération lui-même, une variation de la longueur de la cavité optique, modulant la fréquence propre optique du résonateur opto-mécanique en fonction de la vibration mécanique induite par l'actionnement optique.

Comme pour le fonctionnement du deuxième exemple,
cette déformation du résonateur provoque une modulation de l'amplitude de l'intensité transmise ou réfléchie par le résonateur (à la fréquence de résonance mécanique du résonateur opto-mécanique), en l'absence d'une force extérieure.

Par exemple, lorsqu'une force inertielle est appliquée au capteur, la masse est mise en mouvement, une contrainte s'applique alors au résonateur, ce qui modifie la fréquence de résonance mécanique, modifiant la fréquence de résonance optique. Il en résulte une modulation de l'intensité transmise due à la force inertielle extérieure, qui s'ajoute à celle due à l'excitation du résonateur.

De préférence, on mesure la variation de fréquence mécanique du résonateur opto-mécanique entre la fréquence mécanique à vide (sans contrainte) et la fréquence mécanique du résonateur modifiée par l'apparition d'une force extérieure. Il est alors possible de remonter à la force extérieure. Le déplacement de la masse d'épreuve induit aussi une variation de l'amplitude du signal comme le montre la figure 10 car le point de fonctionnement sur la fonction de transfert se déplace. Ce faisant, l'amplitude du signal optique varie. Cette méthode de détection est une alternative à la détection fréquentielle, néanmoins elle présente un rapport signal à bruit moins favorable.

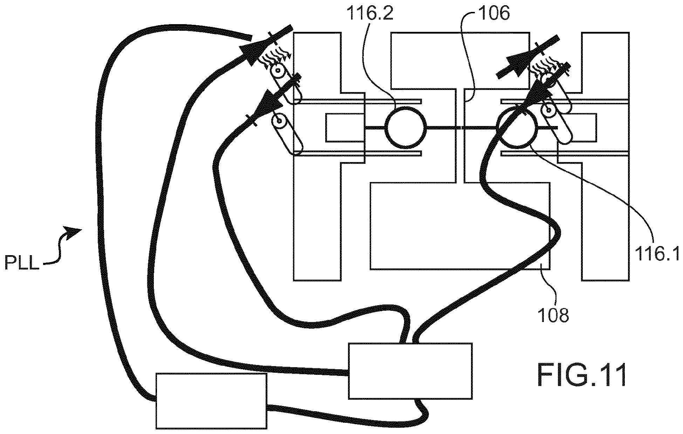

De manière avantageuse, le suivi de la fréquence de résonance mécanique, qui est la fréquence de modulation du signal optique de détection, peut se faire à travers une boucle fermée PLL par exemple en incluant une lecture hétérodyne différentielle (lock-in différentiel : LIA différentiel) représentée schématiquement sur la figure 11 avec un rebouclage à travers un correcteur pour former une Boucle à verrouillage de Phase (PLL : phase-locked loop en terminologie anglo-saxonne). La lecture hétérodyne consiste à utiliser le signal de modulation du laser pompe comme signal de synchronisation du LIA. Cette méthode permet en outre de réaliser une détection à basse fréquence d'un signal initialement à haute fréquence qui est la fréquence de résonance mécanique du résonateur opto-mécanique.

Le traitement des données permet de suivre la phase de l'oscillation mécanique et de contrôler le signal de modulation en amplitude du laser pompe, par exemple à travers un modulateur électro-optique, ou en modulant directement le laser.

Par exemple, le capteur permet de réaliser des accéléromètres, des gyromètres multiaxes en combinant par exemple plusieurs capteurs inertiels, un pour chaque axe, des capteurs de pression et des capteurs de champ, tels que les magnétomètres multiaxes.

Un exemple de réalisation d'un magnétomètre va maintenant être décrit. Le capteur peut reprendre par exemple la structure de la figure 1A. Le magnétomètre comporte une couche magnétique déposée sur la masse d'épreuve. La couche magnétique comporte par exemple des alternances de couches ferromagnétiques et /antiferromagnétiques formées sur la masse d'épreuve.

Lorsque le capteur subit un champ magnétique, la masse d'épreuve portant la couche 10 tend à s'aligner sur le champ magnétique externe. Le déplacement de la masse est amplifié. L'entrefer entre la masse et le ou les résonateurs varie. La détection se fait en détectant cette variation de d'entrefer de la manière décrite en relation avec la figure 1A.

En variante, un magnétomètre selon la présente invention peut mettre en oeuvre la variation de contrainte.

Il sera compris qu'un magnétomètre selon l'invention peut mettre en oeuvre deux résonateurs optiques.

En général une masse est utilisée pour chaque axe. Pour la détection selon l'axe orthogonal au plan du capteur, la masse a un déplacement hors plan, le résonateur optique est alors situé dans un plan parallèle à la masse.

Un exemple de réalisation d'un capteur de pression va maintenant être décrit.

Il comporte une membrane, une poutre de transmission articulée en rotation selon un axe contenu dans le plan du capteur, dont une première extrémité longitudinale est destinée à être déplacée par la membrane, et un élément d'influence solidaire d'une deuxième extrémité longitudinale de la poutre, opposée à la première extrémité par rapport à l'axe de rotation. Le capteur comporte également au moins un résonateur optique dans un plan parallèle au plan du capteur.

Lorsqu'une pression est appliquée à la membrane, la déformation de la membrane est appliquée à la poutre qui déplace de manière amplifiée l'élément d'influence qui se rapproche ou s'éloigne du résonateur optique. La variation d'influence sur le résonateur optique est détectée comme pour le capteur de la figure 1.

Il sera compris qu'un capteur de pression selon l'invention peut mettre en oeuvre deux résonateurs optiques.

Comme expliqué ci-dessus, des capteurs mettant en oeuvre un bras de levier à mouvement hors-plan ne sort pas du cadre de la présente invention.

Le capteur selon l'invention peut être réalisé par des méthodes connues de la microélectronique par exemple à partir d'un substrat SOI (Silicon on Insulator), en appliquant notamment des étapes de lithographie, gravure, croissance par épitaxie.

## Revendications

1. Capteur physique comportant à partir d'un substrat (4) :
- au moins un premier résonateur optique (16.1), associé à une première structure de guidage pour l'injection (18.1) dans le premier résonateur optique d'une onde lumineuse injectée et la collecte (18.2) en sortie du premier résonateur optique d'une onde lumineuse collectée,
- une structure mécanique (10) apte à modifier la fréquence de résonance optique dudit premier résonateur optique (16.1),
- une masse mobile (8) par rapport au substrat (4), ladite masse (8) étant apte à être mise en mouvement par une force extérieure,
- des moyens de transmission (6) du déplacement de la masse (8) à la structure mécanique (10), lesdits moyens de transmission (6) comportant une poutre articulée en rotation par rapport au substrat (4) par une liaison pivot (12) et la masse (8) étant solidaire mécaniquement de la poutre (6),
**caractérisé en ce que** la structure mécanique (10) modifie la fréquence de résonance optique dudit premier résonateur optique sans contact avec ledit premier résonateur optique et la structure mécanique (10) est disposée par rapport à la masse (8) et à la liaison pivot de sorte que les moyens de transmission (6) transmettent à cette structure mécanique, de manière amplifiée, le déplacement de la masse (8), et,
**en ce que** la masse (8) est solidarisée à la poutre (6) d'un côté de la liaison pivot (12) et la structure mécanique (10) étant solidarisée à la poutre (6) de l'autre côté de la liaison pivot (12).

2. Capteur selon la revendication 1, dans lequel la structure de guidage comporte soit un guide d'onde pour l'injection (18.1) de l'onde lumineuse injectée et un guide d'onde pour la collecte (18.2) de l'onde lumineuse collectée, soit un seul guide d'onde disposé de sorte à effectuer à la fois l'injection de l'onde lumineuse injectée et la collecte de l'onde lumineuse collectée.

3. Capteur selon la revendication 1 ou 2, dans lequel la structure mécanique (10) comporte au moins un élément sous forme de plaque dont un bord est apte à se rapprocher et à s'éloigner du premier résonateur optique (16.1).

4. Capteur selon l'une des revendications 1 à 3, dans lequel au moins la masse et les moyens de transmission (6) sont plus épais que le premier résonateur optique (16.1).

5. Capteur selon l'une des revendications 1 à 4, dans lequel la structure mécanique ne comporte pas d'élément optique.

6. Capteur selon l'une des revendications 1 à 5, dans lequel le premier résonateur optique est un anneau optique, un micro tore optique ou un micro disque optique.

7. Capteur selon l'une des revendications 1 à 4, dans lequel le premier résonateur optique est une partie d'un cristal photonique disposée sur le substrat et la structure mécanique comporte une autre partie du cristal photonique, qui est solidaire des moyens de transmission (6).

8. Capteur selon l'une des revendications 1 à 7, comportant un deuxième résonateur optique associé à une deuxième structure de guidage pour l'injection (20.1) dans le deuxième résonateur optique d'une onde lumineuse injectée de fréquence identique à celle injectée dans le premier résonateur, ladite deuxième structure de guidage permettant la collecte (20.2) d'une onde lumineuse collectée en sortie du deuxième résonateur, l'onde lumineuse injectée dans le premier résonateur optique et l'onde lumineuse injectée dans le deuxième résonateur optique étant obtenues par exemple à partir d'une même source lumineuse divisée , lesdits premier et deuxième résonateurs optiques étant disposé de sorte à permettre une mesure différentielle.

9. Ensemble de mesure comportant un capteur selon l'une des revendications 1 à 8, une source d'une onde lumineuse apte à être injectée au moins dans la première structure de guidage, au moins un détecteur de l'onde lumineuse collectée disposé en sortie de la première structure de guidage, et une unité de traitement d'au moins le ou les signaux collectés par le détecteur.

10. Ensemble de mesure selon la revendication 9, dans lequel l'unité de traitement traite une modulation d'amplitude.

11. Ensemble de mesure selon la revendication 9 ou 10, dans lequel la source de l'onde lumineuse injectée a une fréquence différente de la fréquence de transmission maximale du premier résonateur optique en l'absence d'influence de la structure mécanique sur la fréquence de résonance du premier résonateur optique.

12. Ensemble de mesure selon la revendication 9, 10 ou 11, dans lequel l'unité de traitement traite une variation de fréquence de résonance optique du premier résonateur optique ou des variations de fréquences de résonance optique des premier et deuxième résonateurs optiques montés en différentiels.

## Patentansprüche

1. Physikalischer Sensor, enthaltend ausgehend von einem Substrat (4):
- zumindest einen ersten optischen Resonator (16.1), der einer ersten Führungsstruktur zum Einkoppeln (18.1) einer eingekoppelten Lichtwelle in den ersten optischen Resonator und zum Abfangen (18.2) einer abgefangenen Lichtwelle am Ausgang des ersten optischen Resonators zugeordnet ist,
- eine mechanische Struktur (10), die dazu geeignet ist, die optische Resonanzfrequenz des ersten optischen Resonators (16.1) zu modifizieren,
- eine relativ zum Substrat (4) bewegliche Masse (8), wobei die Masse (8) dazu geeignet ist, durch eine äußere Kraft in Bewegung versetzt zu werden,
- Übertragungsmittel (6) zum Übertragen der Verlagerung der Masse (8) auf die mechanische Struktur (10), wobei die Übertragungsmittel (6) einen Balken aufweisen, der über eine Schwenkverbindung (12) relativ zu dem Substrat (4) drehbar angelenkt ist, und wobei die Masse (8) mechanisch fest mit dem Balken (6) verbunden ist,
**dadurch gekennzeichnet, dass** die mechanische Struktur (10) die optische Resonanzfrequenz des ersten optischen Resonators ohne Kontakt mit dem ersten optischen Resonator modifiziert und die mechanische Struktur (10) in Bezug auf die Masse (8) und die Schwenkverbindung so angeordnet ist, dass die Übertragungsmittel (6) die Verlagerung der Masse (8) in verstärkter Weise auf diese mechanische Struktur übertragen, und
dass die Masse (8) auf einer Seite der Schwenkverbindung (12) an dem Balken (6) befestigt ist und die mechanische Struktur (10) auf der anderen Seite der Schwenkverbindung (12) an dem Balken befestigt ist.

2. Sensor nach Anspruch 1, wobei die Führungsstruktur entweder einen Wellenleiter zum Einkoppeln (18.1) der eingekoppelten Lichtwelle und einen Wellenleiter zum Abfangen (18.2) der abgefangenen Lichtwelle oder aber einen einzelnen Wellenleiter enthält, der so angeordnet ist, dass er zugleich das Einkoppeln der eingekoppelten Lichtwelle und das Abfangen der abgefangenen Lichtwelle durchführt.

3. Sensor nach Anspruch 1 oder 2, wobei die mechanische Struktur (10) zumindest ein plattenförmiges Element enthält, von dem ein Rand dazu geeignet ist, sich dem ersten optischen Resonator (16.1) anzunähern und sich davon zu entfernen.

4. Sensor nach einem der Ansprüche 1 bis 3, wobei zumindest die Masse und die Übertragungsmittel (6) dicker ausgeführt sind als der erste optische Resonator (16.1).

5. Sensor nach einem der Ansprüche 1 bis 4, wobei zumindest die mechanische Struktur kein optisches Element enthält.

6. Sensor nach einem der Ansprüche 1 bis 5, wobei der erste optische Resonator ein optischer Ring, ein optischer Mikrotorus oder eine optische Mikroscheibe ist.

7. Sensor nach einem der Ansprüche 1 bis 4, wobei der erste optische Resonator ein auf dem Substrat angeordneter Teil eines photonischen Kristalls ist und die mechanische Struktur einen weiteren Teil des photonischen Kristalls enthält, der fest mit den Übertragungsmitteln (6) verbunden ist.

8. Sensor nach einem der Ansprüche 1 bis 7, enthaltend einen zweiten optischen Resonator, der einer zweiten Führungsstruktur zum Einkoppeln (20.1) einer eingekoppelten Lichtwelle in den zweiten optischen Resonator zugeordnet ist, die eine gleiche Frequenz wie die in den ersten Resonator eingekoppelten Lichtwelle hat, wobei die zweite Führungsstruktur das Abfangen (20.2) einer abgefangenen Lichtwelle am Ausgang des zweiten optischen Resonators gestattet, wobei die in den ersten optischen Resonator eingekoppelte Lichtwelle und die in den zweiten optischen Resonator eingekoppelte Lichtwelle beispielsweise ausgehend von einer gleichen geteilten Lichtquelle erhalten werden, wobei der erste und der zweite optische Resonator so angeordnet sind, dass sie eine differenzielle Messung gestatten.

9. Messanordnung mit einem Sensor nach einem der Ansprüche 1 bis 8, einer Quelle einer Lichtwelle, die dazu geeignet ist, zumindest in die erste Führungsstruktur eingekoppelt zu werden, zumindest einen Detektor für die abgefangene Lichtwelle, der am Ausgang der ersten Führungsstruktur angeordnet ist, und mit einer Verarbeitungseinheit zum Verarbeiten zumindest des bzw. der von dem Detektor abgefangenen Signale.

10. Messanordnung nach Anspruch 9, wobei die Verarbeitungseinheit eine Amplitudenmodulation verarbeitet.

11. Messanordnung nach Anspruch 9 oder 10, wobei die Quelle der eingekoppelten Lichtwelle eine Frequenz hat, die von der maximalen Übertragungsfrequenz des ersten optischen Resonators verschieden ist, wenn kein Einfluss der mechanischen Struktur auf die Resonanzfrequenz des ersten optischen Resonators vorliegt.

12. Messanordnung nach Anspruch 9, 10 oder 11, wobei die Verarbeitungseinheit eine Schwankung der optischen Resonanzfrequenz des ersten optischen Resonators oder Schwankungen der optischen Resonanzfrequenzen des ersten und des zweiten optischen Resonators verarbeitet, die differenziell geschaltet sind.

## Claims

1. A physical sensor comprising from a substrate (4) :
- at least one first optical resonator (16.1), associated with a first guide structure for injecting (18.1) in the first optical resonator a injected light wave and collecting (18.2) at the output of the first optical resonator a collected light wave,
- a mechanical structure (10) able to modify the optical resonance frequency of said first optical resonator (16.1),
- a mass (8, 108) movable relative to the substrate (4), said mass (8) being able to be moved by an external force,
- transmitting means (6) for transmitting the displacement of the mass (8) to the mechanical structure (10), said transmitting means (6) comprising a beam rotatably hinged relative to the substrate (4) by a pivot connection (12) and the mass (8) being mechanically fixed to the beam,
**characterized in that** the mechanical structure (10) modifies the optical resonance frequency of said first optical resonator without contact with said first optical resonator and the mechanical structure is disposed relative to the mass and to the pivot connection such that the transmitting means (6) transmit to this mechanical structure (10), in an amplified manner, the displacement of the mass (8), and
**in that** the mass (8) is secured to the beam (6) on one side of the pivot connection and the mechanical structure (10) is secured to the beam (6) on the other side of the pivot connection (12).

2. The sensor according to claim 1, wherein the guide structure comprises either a wave guide for injecting (18.1) the injected light wave and a wave guide for collecting the collected light wave, or a single wave guide disposed so as to perform both injecting the injected light wave and collecting the collected light wave.

3. The sensor according to claim 1 or 2, wherein the mechanical structure (10) comprises at least one plate shaped element an edge of which is able to be moved closer to and away from the first optical resonator (16.1).

4. The sensor according to one of the claims 1 to 3, wherein the mass and the transmitting means (6) are thicker than the first optical resonator (16.1).

5. The sensor according to one of the claims 1 to 4, wherein the mechanical structure does not comprise ay optical element.

6. The sensor according to one of the claims 1 to 5, wherein the first optical resonator is an optical ring, an optical micro-toroidal core or a micro-optical disk.

7. The sensor according to one of the claims 1 to 4, wherein the first optical resonator is a part of a photonic crystal disposed on the substrate and the mechanical structure comprises another part of the photonic crystal, which is integral with the transmitting means (6).

8. The sensor according to one of the claims 1 to 7, comprising a second optical resonator associated with a second guide structure for injecting (20.2) in the second optical resonator an injected light wave with a frequency identical to the injected light wave in the first resonator, said second guide structure enabling collecting (20.2) a collected light wave at the output of the second resonator, the injected light wave in the first optical resonator and the injected light wave in the second optical resonator being obtained for example from the same divided light source, said first and second optical resonators being disposed so as to enable a differential measurement.

9. A measuring assembly comprising a sensor according to one of the claims 1 to 8, a source of a light wave able to be injected at least in the first guide structure, at least one detector for the collected light wave disposed at the output of the first guide structure, and a unit for processing at least the signal(s) collected by the detector.

10. The measuring assembly according to claim 9, wherein the processing unit processes an amplitude modulation.

11. The measuring assembly according to claim 9 or 10, wherein the source of the injected light wave has a frequency different from the maximum transmission frequency of the first optical resonator in the absence of influence of the mechanical structure on the resonance frequency of the first optical resonator.

12. The measuring assembly according to claim 9, 10 or 11, wherein the processing unit processes a variation in the optical resonance frequency of the first optical resonator or variations in the optical resonance frequencies of the first and second optical resonators mounted as differentials.
